(19)

**Europäisches Patentamt**
**European Patent Office**
**Office européen des brevets**

(11) **EP 4 246 662 A1**

(12) # EUROPEAN PATENT APPLICATION
published in accordance with Art. 153(4) EPC

(43) Date of publication:
**20.09.2023 Bulletin 2023/38**

(21) Application number: **21965151.0**

(22) Date of filing: **25.11.2021**

(51) International Patent Classification (IPC):
*H01M 10/60* (2014.01)    *H01M 10/44* (2006.01)
*B60L 53/00* (2019.01)    *H02J 7/00* (2006.01)

(52) Cooperative Patent Classification (CPC):
**B60L 53/00; H01M 10/44; H01M 10/60; H02J 7/00**

(86) International application number:
**PCT/CN2021/133268**

(87) International publication number:
**WO 2023/092416 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited**
**Ningde, Fujian 352100 (CN)**

(72) Inventors:
• **HUANG, Shan**
  **Ningde, Fujian 352100 (CN)**

• **XU, Guangyu**
  **Ningde, Fujian 352100 (CN)**
• **LI, Haili**
  **Ningde, Fujian 352100 (CN)**
• **LI, Shichao**
  **Ningde, Fujian 352100 (CN)**

(74) Representative: **von Tietzen und Hennig, Nikolaus
Lorenz Seidler Gossel
Rechtsanwälte Patentanwälte
Partnerschaft mbB
Widenmayerstraße 23
80538 München (DE)**

(54) **METHOD FOR CHARGING TRACTION BATTERY, AND BATTERY MANAGEMENT SYSTEM**

(57)    Embodiments of the present application provide a method for charging a power battery and a battery management system, which can meet users' requirements for the charging speed while ensuring the safety performance of the power battery. The method is applied to a battery management system (BMS) for the power battery, the method comprising: determining a first charging current for the power battery; determining, according to the temperature of the power battery, whether to perform thermal management of the power battery; determining, if determining to perform the thermal management of the power battery, a thermal management current according to the first charging current and charging pile power; and sending the first charging current and the thermal management current to a charging pile, wherein the first charging current is used for charging the power battery and the thermal management current is used for performing the thermal management of the power battery.

| | |
|---|---|
| Determining a first charging current for a power battery | S210 |
| Determining, according to the temperature of the power battery, whether to perform thermal management of the power battery | S220 |
| Determining, if determining to perform the thermal management of the power battery, a thermal management current according to the first charging current and charging pile power | S230 |
| Sending the first charging current and the thermal management current to a charging pile | S240 |

**Fig. 2**

EP 4 246 662 A1

## Description

## Technical Field

The present application relates to the field of power batteries, and in particular to a method for charging a power battery and a battery management system.

## Background

With the development of the times, electric vehicles, due to their high environmental protection, low noise, low cost of use and other advantages, have a huge market prospect and can effectively promote energy saving and emission reduction, which is beneficial to the development and progress of society.

For electric vehicles and their related fields, the battery technology is an important factor in their development, especially the safety performance of power batteries, which affects the development and application of power battery-related products and affects the public's acceptance of electric vehicles. At the same time, users and consumers have increasingly high requirements for the charging speed of electric vehicles. Therefore, how to meet users' requirements for the charging speed while ensuring the safety performance of the power battery is an urgent problem to be solved.

## Summary of the Invention

Embodiments of the present application provide a method for charging a power battery and a battery management system, which can meet users' requirements for the charging speed while ensuring the safety performance of the power battery.

In a first aspect, a method for charging a power battery is provided. The method is applied to a battery management system (BMS) for the power battery, the method comprising: determining a first charging current for the power battery; determining, according to the temperature of the power battery, whether to perform thermal management of the power battery; determining, if determining to perform the thermal management of the power battery, a thermal management current according to the first charging current and charging pile power; and sending the first charging current and the thermal management current to a charging pile, wherein the first charging current is used for charging the power battery and the thermal management current is used for performing the thermal management of the power battery.

In embodiments of the present application, the BMS first determines the charging current for the power battery, and then determines the thermal management current according to the power battery current and the charging pile power in the case where the power battery needs thermal management, that is, the charging current for the power battery is guaranteed on a priority basis, and then the remaining power of the charging pile is used for thermal management of the power battery in the case where thermal management is needed. In this way, it is not only possible to ensure the charging speed of the power battery, but also to avoid the safety problem of the power battery caused by lithium plating due to the temperature of the power battery, such as battery combustion or explosion, by performing thermal management of the power battery, thus ensuring the safety performance of the power battery.

In some possible implementations, the first charging current is the maximum charging current allowed at the temperature of the power battery.

In the above technical solution, the first charging current is the maximum charging current allowed at the temperature of the power battery, which enables further improvement of the charging speed of the power battery.

In some possible implementations, the temperature of the power battery is the temperature of the power battery before charging.

In the above technical solution, it is determined according to the temperature of the power battery before charging whether to perform thermal management of the power battery, so that if it is determined to perform thermal management of the power battery, the BMS is able to perform thermal management of the power battery from the moment the power battery starts to be charged, which avoids the problem that the power battery needs thermal management in a certain period of time but no thermal management is performed on the power battery, resulting in the impact on the charging speed of the power battery.

In some possible implementations, the method further comprises: acquiring a negative electrode potential of the power battery during a charging process for the power battery; determining, according to the negative electrode potential, that the power battery is capable of being charged at the charging pile power; stopping the thermal management of the power battery; and sending a second charging current to the charging pile, wherein the second charging current is used for charging the power battery and is a charging current corresponding to the charging pile power.

In the above technical solution, during the charging process for the power battery, it is judged in real time according to the negative electrode potential of the power battery whether the power battery can be charged at the charging pile power. After determining that the power battery can be charged at the charging pile power, it indicates that the maximum charging capacity of the charging pile can meet the charging requirement of the power battery, and even if the thermal management of the power battery continues at this time, it will not improve the charging speed of the power battery, but will reduce the charging speed of the power battery. Stopping the thermal management of the power battery in this case can avoid the problem of ineffective heating of the power battery, thus achieving the purpose of energy saving.

In some possible implementations, said determining, according to the negative electrode potential, that the power battery is capable of being charged at the charging pile power comprises: determining the second charging current according to a negative electrode potential of the power battery at a current moment, wherein the second charging current is a charging current for the power battery at the next moment; and determining, according to the second charging current as well as the voltage of the power battery, that the power battery is capable of being charged at the charging pile power at the next moment.

In some possible implementations, said determining, according to the temperature of the power battery, whether to perform thermal management of the power battery comprises: comparing the temperature of the power battery with a temperature threshold; and determining to perform the thermal management of the power battery if the temperature of the power battery is less than the temperature threshold.

In the above technical solution, performing thermal management of the power battery when the temperature of the power battery is low improves the temperature of the power battery and avoids the problem of easy lithium plating of the power battery at low temperatures, thus ensuring the normal charging process for the power battery and the safety performance of the power battery.

In some possible implementations, said determining to perform the thermal management of the power battery if the temperature of the power battery is less than the temperature threshold comprises: determining to perform the thermal management of the power battery if the temperature of the power battery is less than the temperature threshold and the difference between the charging pile power and charging power of the power battery is greater than or equal to minimum turn-on power for thermal management, wherein the charging power is the product of the first charging current and the voltage of the power battery.

In some cases, even if the temperature of the power battery is less than the temperature threshold, the difference between the charging pile power and the charging power of the power battery is so small that the minimum turn-on power for thermal management may not be met. In the above technical solution, only when the temperature of the power battery is less than the temperature threshold and the difference between the charging pile power and the charging power is greater than or equal to the minimum turn-on power for thermal management, the BMS determines to perform thermal management of the power battery, that is, multiple factors affecting the turn-on of thermal management, such as the temperature of the power battery and the minimum turn-on power for thermal management, are taken into comprehensive consideration, so as to effectively ensure the smooth thermal management of the power battery.

In some possible implementations, in the process of performing the thermal management of the power battery, the method further comprises: adjusting the first charging current to a third charging current if the negative electrode potential of the power battery drops to a negative electrode potential safety threshold, the third charging current being less than the first charging current.

In the above technical solution, when the negative electrode potential of the power battery drops to the negative electrode potential safety threshold, it indicates that this power battery may be about to experience lithium plating, and reducing the charging request current for the power battery in this case can avoid the safety problem of the power battery caused by lithium ion aggregation and other problems, such as battery combustion or explosion, thus ensuring the safety performance of the power battery.

In some possible implementations, in the process of performing the thermal management of the power battery, the method further comprises: adjusting the first charging current to a fourth charging current if the negative electrode potential of the power battery does not drop to a negative electrode potential safety threshold and a charging duration of the power battery is greater than a time threshold, the fourth charging current being greater than the first charging current.

In the above technical solution, if the negative electrode potential of the power battery does not drop to the negative electrode potential safety threshold for a long time, it indicates that the charging current for the power battery for the current moment is too small. Increasing the charging request current for the power battery in this case can increase the charging speed and greatly reduce the charging duration of the power battery, thereby improving the user experience.

In some possible implementations, the method further comprises: determining the negative electrode potential safety threshold according to a battery state parameter of the power battery, the battery state parameter comprising at least one of the state of charge (SOC), the temperature, and the state of health (SOH) of the power battery.

Since the risk level of lithium plating of the power battery is closely related to its own battery state parameter, the above technical solution determines the negative electrode potential safety threshold according to the battery state parameter of the power battery, so that the determined negative electrode potential safety threshold can be more accurate and closer to the critical potential of lithium plating of the power battery, which can further ensure the safety performance of the power battery.

In a second aspect, a battery management system for charging a power battery is provided, comprising: a determination unit for determining a first charging current for the power battery; the determination unit being further used for determining, according to the temperature of the power battery, whether to perform thermal management of the power battery; and the determination unit being further used for determining, if determining to perform the thermal management of the power battery, a thermal management current according to the first charging current and charging pile power; and a communication unit for sending the first charging current and the thermal management current to a charging pile, wherein the first charging current is used for charging the power battery and the thermal management current is used for performing the thermal management of the power battery.

In some possible implementations, the first charging current is the maximum charging current allowed at the temperature of the power battery.

In some possible implementations, the temperature of the power battery is the temperature of the power battery before charging.

In some possible implementations, the battery management system further comprises: an acquisition unit for acquiring a negative electrode potential of the power battery during a charging process for the power battery; the determination unit being further used for determining, according to the negative electrode potential, that the power battery is capable of being charged at the charging pile power; a management unit for stopping the thermal management of the power battery; and the communication unit being further used for sending a second charging current to the charging pile, wherein the second charging current is used for charging the power battery and is a charging current corresponding to the charging pile power.

In some possible implementations, the determination unit is specifically used for: determining the second charging current according to a negative electrode potential of the power battery at a current moment, the second charging current being a charging current for the power battery at the next moment; and determining, according to the second charging current as well as the voltage of the power battery, that the power battery is capable of being charged at the charging pile power at the next moment.

In some possible implementations, the determination unit is specifically used for: comparing the temperature of the power battery with a temperature threshold; and determining to perform the thermal management of the power battery if the temperature of the power battery is less than the temperature threshold.

In some possible implementations, the determination unit is specifically used for: determining to perform the thermal management of the power battery if the temperature of the power battery is less than the temperature threshold and the difference between the charging pile power and charging power of the power battery is greater than or equal to minimum turn-on power for thermal management, wherein the charging power is the product of the first charging current and the voltage of the power battery.

In some possible implementations, the battery management system further comprises: an adjustment unit for, in the process of performing the thermal management of the power battery, adjusting the first charging current to a third charging current if the negative electrode potential of the power battery drops to a negative electrode potential safety threshold, the third charging current being less than the first charging current.

In some possible implementations, the battery management system further comprises: an adjustment unit for, in the process of performing the thermal management of the power battery, adjusting the first charging current to a fourth charging current if the negative electrode potential of the power battery does not drop to a negative electrode potential safety threshold and a charging duration of the power battery is greater than a time threshold, the fourth charging current being greater than the first charging current.

In some possible implementations, the determination unit is further used for: determining the negative electrode potential safety threshold according to a battery state parameter of the power battery, the battery state parameter comprising at least one of the state of charge (SOC), the temperature, and the state of health (SOH) of the power battery.

In a third aspect, a battery management system (BMS) for a power battery is provided, comprising: a memory for storing a program; and a processor for executing the program stored in the memory, wherein the program stored in the memory is executed, the processor is used to execute the method in the first aspect above or in each of its implementations.

## Brief Description of Drawings

In order to illustrate the technical solutions of the examples of the present application more clearly, the following briefly introduces the drawings required in the examples of the present application. Obviously, the drawings described below are only some examples of the present application. For those of ordinary skill in the art, other drawings can also be obtained according to the drawings without any creative effort.

Fig. 1 is an architecture diagram of a charging system to which an embodiment of the present application applies.
Fig. 2 is a schematic diagram of a method for charging a power battery of an embodiment of the present application.

Fig. 3 is a schematic diagram of a hierarchical first-order RC equivalent circuit model of an embodiment of the present application.

Fig. 4 is a schematic flowchart of a method for charging a power battery of an embodiment of the present application.

Fig. 5 is a schematic block diagram of a BMS of an embodiment of the present application.

Fig. 6 is a schematic block diagram of a BMS of an embodiment of the present application.

**Detailed Description**

Embodiments of the present application will be described in further detail hereinafter in conjunction with the accompanying drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are only used for descriptive purposes, and cannot be construed as indicating or implying relative importance.

In the field of new energy, power batteries can be used as the main power source for electrical apparatuses (e.g., vehicles, ships or spacecraft, and so on). At present, the power batteries on the market are mostly rechargeable storage batteries, and the most common ones are lithium batteries, such as lithium-ion batteries or lithium-ion polymer batteries, and the like. However, in some special scenarios, the safety performance of power batteries is low. For example, in a low-temperature scenario, during the charging process for a power battery, the power battery is prone to phenomena such as lithium plating, wherein the lithium plating phenomena not only degrade the performance of the power battery and shorten the cycle life significantly, but also limit the fast charging capacity of the power battery and may cause catastrophic consequences such as combustion and explosion, resulting in serious safety problems.

In addition, users have increasingly high requirements for the charging speed of power batteries. However, in the special scenario described above, the charging speed of the power battery is difficult to meet the user's requirements.

In view of this, embodiments of the present application propose a method for charging a power battery, which can meet users' requirements for the charging speed while ensuring the safety performance of the power battery.

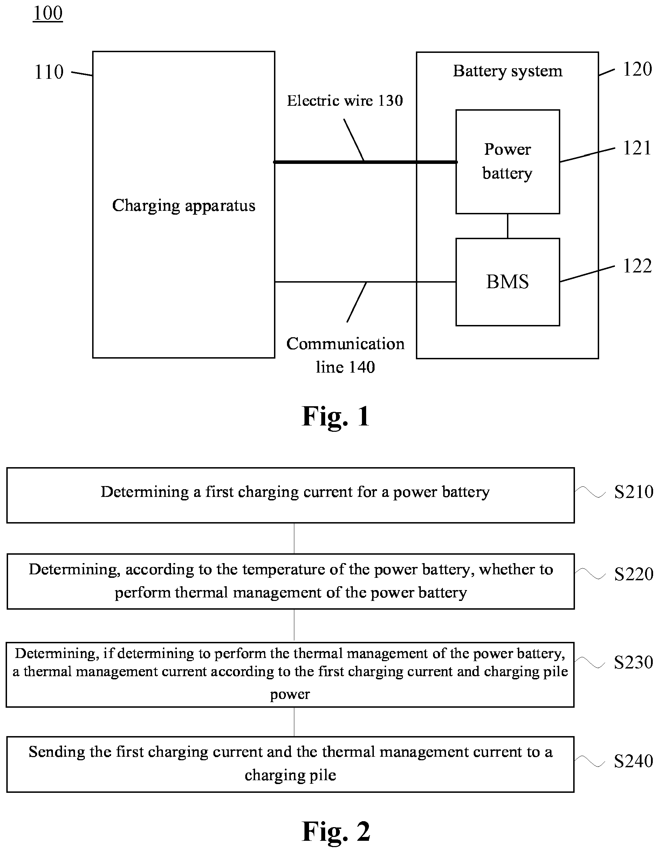

Fig. 1 illustrates an architecture diagram of a charging system to which an embodiment of the present application applies. As shown in Fig. 1, the charging system 100 may include: a charging apparatus 110 and a battery system 120. Optionally, the battery system 120 may be a battery system in an electric vehicle (including all-electric vehicles and pluggable hybrid electric vehicles) or a battery system in other application scenarios.

Optionally, the battery system 120 may be provided with at least one battery pack, and the at least one battery pack as a whole may be collectively referred to as the power battery 121. In terms of the type of the battery, this power battery 121 may be any type of battery, including but not limited to: lithium-ion battery, lithium metal battery, lithium sulfur battery, lead acid battery, nickel cadmium battery, nickel metal hydride battery, or lithium air battery and the like. In terms of the scale of the battery, the power battery 121 in the embodiments of the present application may be a battery cell/cell, or a battery module or a battery pack, wherein the battery module or battery pack may be formed by multiple batteries connected in series and in parallel. In the embodiments of the present application, no specific limitation is imposed on the specific type and scale of the power battery 121.

In addition, in order to intelligently manage and maintain the power battery 121, to prevent the power battery 121 from overcharging and overdischarging, and to extend the service life of the battery, the battery system 120 is generally provided with a battery management system (BMS) 122 for implementing functions of charge and discharge management, high-voltage control, battery protection, battery data collection, battery state evaluation, and the like. Optionally, the BMS 122 may be integrated with the power battery 121 in the same device or apparatus, or the BMS 122 may be provided outside the power battery 121 as an independent device or apparatus.

The charging apparatus 110 can output charging power to charge the power battery 121 in accordance with the charging requirement of the BMS 122. For example, the charging apparatus 110 can output a voltage and a current in accordance with the required voltage and the required current sent by the BMS 122. Optionally, the charging apparatus 110 in embodiments of the present application may be a charging pile, also referred to as a charger. The charging pile here may be, for example, a normal charging pile, a super charging pile, a charging pile supporting a vehicle to grid (V2G) mode, or the like.

As shown in Fig. 1, the charging apparatus 110 may be connected to the power battery 121 via an electric wire 130 and to the BMS 122 via a communication line 140, where the communication line 140 is used to achieve information interaction between the charging apparatus 110 and the BMS. As an example, the communication line 140 includes, but is not limited to, a control area network (CAN) communication bus or a daisy chain communication bus.

The charging apparatus 110 may communicate with the BMS 122 via a wireless network in addition to communicating with the BMS 122 via the communication line 140. Embodiments of the present application do not specifically limit either the type of wired communication or the type of wireless communication between the charging apparatus 110 and the BMS 122.

Fig. 2 illustrates a schematic diagram of a method 200 for charging a power battery of an embodiment of the present application. The method 200 may be performed by a BMS, and the BMS may be, for example, the BMS 122 in Fig. 1. The method 200 may include at least some of the following contents.

Step S210: determining a first charging current for the power battery.

Step S220: determining, according to the temperature of the power battery, whether to perform thermal management of the power battery.

Step S230: determining, if determining to perform the thermal management of the power battery, a thermal management current according to the first charging current and charging pile power.

Step S240: sending the first charging current and the thermal management current to a charging pile, wherein the first charging current is used for charging the power battery and the thermal management current is used for performing the thermal management of the power battery.

Here, performing thermal management of the power battery can be understood as heating the power battery.

Optionally, the BMS can determine the first charging current based on parameters such as the state of charge (SOC), the temperature and the state of health (SOH), and the voltage of the power battery. The SOH can be used to indicate the aging state of the power battery, which can also be understood as the remaining life of the power battery. After a long period of operation, the performance of the power battery will continue to decay, so the remaining life will be shorter, that is, the SOH value will be smaller. The SOC can be used to indicate the remaining capacity of the power battery, which is numerically defined as the ratio of the current remaining capacity of the power battery to the total available capacity, and is commonly expressed as a percentage. Specifically, when SOC=100%, it means that the power battery is completely fully charged; and conversely, when SOC=0%, it means that the power battery is completely discharged.

Optionally, the BMS can send the first charging current and the thermal management current to the charging pile at the same time. Alternatively, the BMS can first send the first charging current to the charging pile, and then send the thermal management current to the charging pile; or alternatively, the BMS can first send the thermal management current to the charging pile, and then send the first charging current to the charging pile.

Optionally, the first charging current and/or the thermal management current may be carried in, but not limited to, the battery charging requirement (BCL) message.

In the above technical solution, the BMS first determines the charging current for the power battery, and then determines the thermal management current according to the power battery current and the charging pile power in the case where the power battery needs thermal management, that is, the charging current for the power battery is guaranteed on a priority basis, and then the remaining power of the charging pile is used for thermal management of the power battery in the case where thermal management is needed. In this way, it is not only possible to ensure the charging speed of the power battery, but also to avoid the safety problem of the power battery caused by lithium plating due to the temperature of the power battery, such as battery combustion or explosion, by performing thermal management of the power battery, thus ensuring the safety performance of the power battery.

In order to further improve the charging speed of the power battery, in some embodiments, the first charging current may be the maximum charging current allowed at the temperature of the power battery. In this way, the charging speed of the power battery can be further improved and the charging duration can be reduced so that the charging requirements of the user can be met.

In some embodiments, the temperature of the power battery can be the temperature of the power battery before charging. In this way, if it is determined to perform thermal management of the power battery, the BMS is able to perform thermal management of the power battery from the moment the power battery starts to be charged, which avoids the problem that the power battery needs thermal management in a certain period of time but no thermal management is performed on the power battery, resulting in the impact on the charging speed of the power battery.

Optionally, in embodiments of the present application, the first charging current $I_1$ and the thermal management current $I_2$ may satisfy the following relationship:

$$I_2 = (P_0 - I_1 * U_0)/U_0$$

where Po is the charging pile power and Uo is the voltage of the power battery. In other words, the sum of the charging power and the thermal management power of the power battery is the charging pile power. For example, if the charging pile power is 11 KW and the charging power corresponding to the temperature of the power battery before charging is 9 KW, the thermal management power is 2 KW.

During the charging and thermal management processes of the power battery, the temperature of the power battery is constantly rising. Therefore, the BMS needs to determine in real time during the charging process whether the power battery can be charged at the charging pile power. Therefore, in some embodiments, the method 200 may further include: during a charging process for the power battery, the BMS acquires the negative electrode potential (or referred to as anode potential) of the power battery, and determines based on the negative electrode potential that the power battery can be charged at the charging pile power, and stops thermal management of the power battery and sends a second charging current to the charging pile, wherein the second charging current is used for charging the power battery and is a charging current corresponding to the charging pile power.

Optionally, the BMS may acquire the negative electrode potential of the power battery in real time. As an example, the BMS may periodically acquire the negative electrode potential of the power battery. For example, the BMS may acquire the negative electrode potential every 5s.

In embodiments of the present application, no specific limitation is imposed on the specific implementation for the BMS to acquire the negative electrode potential of the power battery. For example, the BMS can estimate the negative electrode potential of the power battery by a negative electrode potential estimation model, or the BMS can obtain the negative electrode potential of the power battery by means of actual measurement of the three-electrode battery with a reference electrode.

In one embodiment, for a two-electrode battery, the BMS can acquire the negative electrode potential by separating the positive and negative electrodes of the battery using a negative electrode potential estimation model. Here, the negative electrode potential estimation model may be, for example, an equivalent circuit model, an electrochemical model, and an equivalent circuit and electrochemical coupled model.

In another embodiment, the BMS can also acquire the negative electrode potential of the power battery by collecting the negative electrode potential of a three-electrode battery with a reference electrode and the potential of the reference electrode, wherein the three-electrode battery means that in addition to including the positive and negative electrodes of a conventional two-electrode battery, a new reference electrode is added, which is, for example, a lithium metal reference electrode, a lithium alloy reference electrode, or a copper wire in situ lithium-plated reference electrode, and so on.

Specifically, a polarization equivalent model for the three-electrode battery can be established first, wherein this polarization equivalent model may include positive and negative parameters to reflect the external and internal characteristics of the three-electrode battery to facilitate accurate prediction of the negative electrode potential. Here, the polarization equivalent model may include a hierarchical Rint model, a polarization first-order RC equivalent circuit model, a polarization second-order RC equivalent circuit model, and so on.

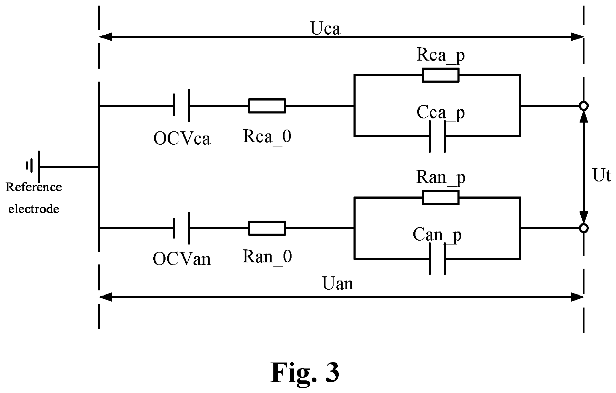

Fig. 3 illustrates a schematic diagram of a polarization first-order RC equivalent circuit model of an embodiment of the present application. As shown in Fig. 3, Ut is the full battery terminal voltage; and Uca and Uan are the potential of the positive electrode relative to the reference electrode and the potential of the negative electrode relative to the reference electrode, respectively. OCVca and OCVan denote the open-circuit voltage of the positive electrode and the open-circuit voltage of the negative electrode, respectively; Rca_0 and Ran_0 denote the ohmic internal resistance of the positive electrode and the ohmic internal resistance of the negative electrode, respectively; Uca_p and Uan_p denote the polarization voltage of the positive electrode and the polarization voltage of the negative electrode, respectively; Rca_p and Ran_p denote the polarization internal resistance of the positive electrode and the polarization internal resistance of the negative electrode, respectively; Cca_p and Can_p denote the polarization capacitance of the positive electrode and the polarization capacitance of the negative electrode, respectively; and I denotes the current. Uca_p' and Uan_p' denote the derivatives of Uca_p and Uan_p, respectively.

First, the open-circuit voltage OCVca of the positive electrode and the open-circuit voltage OCVan of the negative electrode can be obtained from actual measurements, and then the model parameters Rca_0, Ran_0, Rca_p, Ran_p, Cca_p, and Can_p can be calibrated according to Equations (1)-(5) in combination with optimization algorithms, such as the least square method and genetic algorithms, and finally the negative electrode potential can be estimated using the extended Kalman filter algorithm, the proportional integral differential (PID) algorithm, or the Longaberger observer.

$$Ut = Uca - Uan \qquad\qquad (1)$$

$$Uca = OCVca + I * Rca\_0 + Uca\_p \qquad\qquad (2)$$

$$Uan = OCVan + I * Ran\_0 + Uan\_p \qquad\qquad (3)$$

$$Uca\_p' = I/Cca\_p - Uca\_p/(Rca\_p*Cca\_p) \tag{4}$$

$$Uan\_p' = I/Can\_p - Uan\_p/(Ran\_p*Can\_p) \tag{5}$$

An embodiment for estimating the negative electrode potential using the extended Kalman filter algorithm will be briefly described below. The extended Kalman filter algorithm consists mainly of the state equation (6) and the observation equation (7), which are then combined with the recursion equations (8)-(12) to iteratively update the time and state so as to achieve state estimation.

$$X_{k+1} = A_k X_k + B_k U_k + Q_k \tag{6}$$

$$Y_k = C_k X_k + R_k \tag{7}$$

$$\hat{X}_k^- = A_{k-1}\hat{X}_{k-1} + B_{k-1}U_{k-1} \tag{8}$$

$$P_k^- = A_{k-1}P_{k-1}A_{k-1}^T + Q \tag{9}$$

$$K_k = P_k^- C_k^T (C_k P_k^- C_k^T + R)^{-1} \tag{10}$$

$$\hat{X}_k = \hat{X}_k^- + K_k(Y_k - C_k\hat{X}_k^- - D_k U_k) \tag{11}$$

$$P_k = (1 - K_k C_k)P_k^- \tag{12}$$

where X is the state quantity to be estimated, U is a controllable input quantity, Y is an output quantity, Q and R denote the systematic error and measurement error, respectively, P is the covariance matrix of the estimation error, the subscript k denotes the variable for the moment k, the subscript k-1 denotes the variable for the moment k-1, the subscript k+1 denotes the variable for the moment k+1, the superscript "$\wedge$" denotes the estimated value, and the superscript T denotes the transpose operation on the matrix. P is the covariance matrix of the estimation error, for example, $P_k^-$ denotes the prior estimation covariance matrix for the moment k and $P_k$ denotes the posterior estimation covariance matrix for the moment k. A, B, C, and D are the coefficient matrices and $K_k$ is the Kalman gain.

The values of X, A, B, C, Q, and R are substituted into the above Equations:

$$X_k = \begin{bmatrix} SOC_k \\ Uan\_p_k \\ Uca\_p_k \\ Uan_k \end{bmatrix}$$

$$A_k = \begin{bmatrix} 1 & 0 & 0 & 0 \\ 0 & e^{-\left(\frac{dt}{Ran\_p*Can\_p}\right)} & 0 & 0 \\ 0 & 0 & e^{-\left(\frac{dt}{Rca\_p*Cca\_p}\right)} & 0 \\ d(OCVan_k)/d(SOC_k) & e^{-\left(\frac{dt}{Ran\_p*Can\_p}\right)} & 0 & 0 \end{bmatrix}$$

$$B_k = \begin{bmatrix} dt/(3600 * Cap) \\ Ran\_p * (1 - e^{-\left(\frac{dt}{Ran\_p * Can\_p}\right)}) \\ Rca\_p * (1 - e^{-\left(\frac{dt}{Rca\_p * Cca\_p}\right)}) \\ Ran\_p * \left(1 - e^{-\left(\frac{dt}{Ran\_p * Can\_p}\right)}\right) + Ran\_0 \end{bmatrix}$$

$$C_k = \begin{bmatrix} d(OCVan_k + OCVca_k)/d(SOC_k) \\ 1 \\ 1 \\ 0 \end{bmatrix}$$

$$Q_k = \begin{bmatrix} 0 & 0 & 0 & 0 \\ 0 & 0 & 0 & 0 \\ 0 & 0 & 0 & 0 \\ 0 & 0 & 0 & 0 \end{bmatrix}$$

$$R_k = 0.01$$

That is, the negative electrode potential can be acquired by the negative electrode potential estimation equation:

$$Uan_k = \frac{d(OCVan_k)}{d(SOC_k)} * SOC_k + Uan\_p_k * e^{-\left(\frac{dt}{Ran\_p * Can\_p}\right)} + Ran\_p * \left(1 - e^{-\left(\frac{dt}{Ran\_p * Can\_p}\right)}\right) + Ran\_0$$

After determining the negative electrode potential of the negative electrode potential, the BMS can determine based on the negative electrode potential whether the power battery can be charged at the charging pile power.

Specifically, the BMS can determine a second charging current based on the negative electrode potential, then multiply the voltage of the power battery with the second charging current and compare the resulting product with the charging pile power. If the product is equal to the charging pile power, the BMS may determine that the power battery can be charged at the charging pile power, and thus stop the thermal management of the power battery. If the product is less than the charging pile power, the BMS may determine that the power battery can not be charged at the charging pile power, and thus the BMS continues to perform thermal management of the power battery.

Here, the second charging current can be the charging current for the power battery at the next moment. At this point, the BMS determining, according to the negative electrode potential of the power battery, that the power battery can be charged at the charging pile power may specifically include: the BMS determines the second charging current based on the negative electrode potential of the power battery for the current moment, and determines, according to the second charging current and the voltage of the power battery, that the power battery can be charged at the charging pile power at the next moment.

In other words, the BMS first determines the charging current at the next moment based on the negative electrode potential for the current moment, and then determines according to the voltage of the power battery and the charging current at the next moment that the power battery can be charged at the charging pile power at the next moment. In this way, the BMS still performs thermal management of the power battery at the current moment and stops thermal management of the power battery at the next moment.

In one implementation, the BMS may determine the second charging current by a predictive control algorithm. For example, the BMS may determine the second charging current by a proportion integral differential (PID) control algorithm.

Specifically, the BMS may obtain the second charging current by the following Equation:

$$I0_{k+1} = I0_k + \Delta I_k$$

$$\Delta I_k = k_p \Delta U a n_k + k_i \sum_{i=1}^{k} \Delta U a n_k + k_d (\Delta U a n_k - \Delta U a n_{k-1})$$

where $I0_{k+1}$ is the charging request current for the moment k+1, i.e., the second charging current, $I0_k$ is the charging request current for the moment k, i.e., the first charging current, $\Delta U a n_k$ is the negative electrode potential of the power battery for the moment k, $\Delta U a n_{k-1}$ is the negative electrode potential of the power battery for the moment k-1, and $k_p$, $k_i$, and $k_d$ are the proportional, integral, and differential parameters of the PID control algorithm, respectively. Exemplarily, $k_p$ may be 20, $k_i$ may be 5, and $k_d$ may be 70.

In the above technical solution, during the charging process for the power battery, it is judged in real time according to the negative electrode potential of the power battery whether the power battery can be charged at the charging pile power. After determining that the power battery can be charged at the charging pile power, it indicates that the maximum charging capacity of the charging pile can meet the charging requirement of the power battery, and even if the thermal management of the power battery continues at this time, it will not improve the charging speed of the power battery, but will reduce the charging speed of the power battery. Stopping the thermal management of the power battery in this case can avoid the problem of ineffective heating of the power battery, thus achieving the purpose of energy saving.

When the temperature of the power battery is low, the power battery is prone to the phenomenon of lithium plating, which in turn affects the normal charging process for the power battery and the safety performance of the power battery. Therefore, in some embodiments of the present application, the step 220 may specifically include: comparing the temperature of the power battery with a temperature threshold, and determining to perform the thermal management of the power battery if the temperature of the power battery is less than the temperature threshold.

Exemplarily, the temperature threshold may be 25°C.

In the above technical solution, performing thermal management of the power battery when the temperature of the power battery is low improves the temperature of the power battery and avoids the problem of easy lithium plating of the power battery at low temperatures, thus ensuring the normal charging process for the power battery and the safety performance of the power battery.

However, even if the temperature of the power battery is less than the temperature threshold, the difference between the charging pile power and the charging power of the power battery is so small that the minimum turn-on power for thermal management may not be met. Therefore, further, while the temperature of the power battery is less than the temperature threshold, the difference between the charging pile power and the charging power also needs to be greater than or equal to the minimum turn-on power for thermal management, in which case the BMS determines that thermal management can be performed on the power battery.

The minimum turn-on power for thermal management may be a fixed value. For example, it is 0.2 KW. Alternatively, the minimum turn-on power for thermal management may vary with the battery state parameter of the power battery or the external environment (e.g., environment temperature) to which the power battery is currently exposed. Among them, the battery state parameter may include but is not limited to the SOC, the temperature, and the SOH.

In this way, multiple factors affecting the turn-on of the thermal management are considered comprehensively, such as the temperature of the power battery and the minimum turn-on power for thermal management, thus effectively ensuring the smooth thermal management of the power battery.

In general, during the charging process for the power battery, the negative electrode potential of the power battery gradually drops, and when the negative electrode potential of the power battery drops to a certain potential, the lithium plating phenomenon may occur in the power battery.

Based on this situation, optionally, in embodiments of the present application, in the process of thermal management of the power battery, the method 200 may further include: adjusting the first charging current to a third charging current if the negative electrode potential of the power battery drops to a negative electrode potential safety threshold, the third charging current being less than the first charging current.

Here, the negative electrode potential safety threshold may be slightly higher than the negative electrode potential of the power battery when the lithium plating phenomenon occurs, that is, the difference between the negative electrode potential safety threshold and the negative electrode potential of the power battery when the lithium plating phenomenon occurs is within a preset range.

After adjusting the first charging current to the third charging current, the BMS can send the third charging current to the charging pile to enable the charging pile to charge the power battery based on the third charging current.

In the above technical solution, when the negative electrode potential of the power battery drops to the negative electrode potential safety threshold, it indicates that this power battery may be about to experience lithium plating, and reducing the charging current for the power battery in this case can avoid the safety problem of the power battery caused by lithium ion aggregation and other problems, such as battery combustion or explosion, thus ensuring the safety performance of the power battery.

Alternatively, if the negative electrode potential of the power battery does not drop to the negative electrode potential safety threshold and the charging duration of the power battery is greater than the time threshold, which indicates that the charging current for the current moment is small, then the BMS can increase the charging current for the power battery, that is, adjusting the charging current from the first charging current to a fourth charging current, the fourth charging current being greater than the first charging current.

Optionally, when the BMS sends the first charging current to the charging pile, the BMS can start a timer of which the timing duration is the time threshold. After the timer times out, it indicates that the charging duration of the power battery is greater than the time threshold.

Optionally, the time threshold may be, but is not limited to, 30s.

After adjusting the first charging current to the fourth charging current, the BMS can send the fourth charging current to the charging pile to enable the charging pile to charge the power battery based on the fourth charging current.

In the above technical solution, if the negative electrode potential of the power battery does not drop to the negative electrode potential safety threshold for a long time, it indicates that the charging current for the power battery for the current moment is too small. Increasing the charging current for the power battery in this case can increase the charging speed and greatly reduce the charging duration of the power battery, thereby improving the user experience.

Alternatively, if the negative electrode potential of the power battery does not drop to the negative electrode potential safety threshold and the charging duration of the power battery is less than the time threshold, the charging current for the power battery remains unchanged and the BMS can continue to send the first charging current to the charging pile, or the BMS can continue to acquire the negative electrode potential of the power battery to compare the negative electrode potential with the negative electrode potential safety threshold.

Optionally, after the BMS adjusts the charging current for the power battery, the BMS can continue to restart the timing.

Optionally, after the BMS adjusts the first charging current to the third charging current, the BMS can update the thermal management current based on the third charging current and the charging pile power. Similarly, after the BMS adjusts the first charging current to the fourth charging current, the BMS can update the thermal management current based on the fourth charging current and the charging pile power.

It should be understood that both the third charging current and the fourth charging current are less than the second charging current.

Optionally, the method 200 may also include: the BMS determines the negative electrode potential safety threshold.

In an implementation, the negative electrode potential safety threshold may be a fixed value. For example, the negative electrode potential safety threshold may be pre-configured on the BMS

In another implementation, the BMS can determine the negative electrode potential safety threshold according to the battery state parameter of the power battery.

Optionally, the battery state parameter of the power battery may be the battery state parameter of the power battery before charging. That is, before the power battery is charged, the BMS acquires the battery state parameter of the power battery and determines the negative electrode potential safety threshold based on the battery state parameter. After that, during the whole charging process, the BMS no longer acquires the battery state of the power battery, and the negative electrode potential safety threshold no longer changes.

Optionally, the battery state parameter of the power battery may be the battery state parameter of the power battery during the charging process. That is, during the charging process for the power battery, the BMS can acquire the battery state parameter of the power battery in real time.

Here, the BMS can periodically acquire the battery state parameter of the power battery during the charging process for the power battery. For example, during the charging process for the power battery, the BMS can acquire the battery state parameter of the power battery every 5s.

Alternatively, during the charging process for the power battery, the BMS can acquire the battery state parameter of the power battery once every time the battery state parameter of the power battery changes.

Since the battery state parameter of the power battery may be constantly changing during the charging process, in the above technical solution, the BMS determines the battery state parameter of the power battery during the charging process, so that the determined battery state parameter may be the parameter closest to the actual battery state parameter of the power battery for the current moment, thus making the negative electrode potential safety threshold determined by the BMS according to the latest battery state parameter of the power battery more accurate, which can further improve the charging speed of the battery effectively on the basis of ensuring the safety performance of the battery.

In embodiments of the present application, the higher the risk of lithium plating of the power battery, the higher the negative electrode potential safety threshold.

As an example, when the SOC of the power battery is in a first SOC interval, the negative electrode potential safety threshold is a first preset negative electrode potential safety threshold; and when the SOC of the power battery is in a second SOC interval, the negative electrode potential safety threshold is a second preset negative electrode potential safety threshold. Here, SOCs in the first SOC interval are less than SOCs in the second SOC interval, and the first preset negative electrode potential safety threshold is less than the second preset negative electrode potential safety threshold.

In other words, with other factors remaining unchanged, the larger the SOC of the power battery, the larger the negative electrode potential safety threshold. For example, in the case where the temperature of the power battery is in the range of [-10°C,0°C) and the SOH is 95% to 100%, the negative electrode potential safety threshold is 10 mv when the SOC of the power battery is in the range of [0%, 40%); and the negative electrode potential safety threshold is 15 mv when the SOC of the power battery is in the range of [40%, 80%).

As another example, when the temperature of the power battery is in a first temperature interval, the negative electrode potential safety threshold is a third preset negative electrode potential safety threshold; and when the temperature of the power battery is in a second temperature interval, the negative electrode potential safety threshold is a fourth preset negative electrode potential safety threshold. Here, temperatures in the first temperature interval are less than temperatures in the second temperature interval, and the third preset negative electrode potential safety threshold is greater than the fourth preset negative electrode potential safety threshold.

In other words, with other factors remaining unchanged, the lower the temperature of the power battery, the greater the negative electrode potential safety threshold. For example, in the case where the SOC of the power battery is in the range of [80%, 100%] and the SOH is 85% to 95%, the negative electrode potential safety threshold is 35 mv when the temperature of the power battery is in the range of [-10°C,0°C); and the negative electrode potential safety threshold is 30 mv when the temperature of the power battery is in the range of [0°C,10°C).

As another example, when the SOH of the power battery is in a first SOH interval, the negative electrode potential safety threshold is a fifth preset negative electrode potential safety threshold; and when the SOH of the power battery is in a second SOH interval, the negative electrode potential safety threshold is a sixth preset potential safety threshold. Here, SOHs in the first SOH interval are less than SOHs in the second SOH interval, and the fifth preset negative electrode potential safety threshold is greater than the sixth preset negative electrode potential safety threshold.

In other words, with other factors remaining unchanged, the smaller the SOH of the power battery, the larger the negative electrode potential safety threshold. For example, in the case where the SOC of the power battery is in the range of [0%, 40%) and the temperature is in the range of [-10°C,0°C), the negative electrode potential safety threshold is 18 mv when the SOH of the power battery is 85% to 90%; and the negative electrode potential safety threshold is 15 mv when the SOH of the power battery is 90% to 95%.

It should be understood that the specific examples herein are intended only to assist those skilled in the art to better understand the embodiments of the present application and are not intended to limit the scope of the embodiments of the present application.

It should also be understood that in embodiments of the present application, "first", "second", "third", and "fourth" are used only to distinguish different objects, but do not limit the scope of embodiments of the present application.

In the above technical solution, the negative electrode potential safety threshold is set based on the degree of risk of lithium plating of the power battery. On the one hand, the negative electrode potential safety threshold corresponding to the power battery with high risk of lithium plating is set relatively large, which can effectively suppress the risk of lithium plating of the power battery and thus improve the safety performance of the power battery. On the other hand, the negative electrode potential safety threshold corresponding to the power battery with low risk of lithium plating is set relatively small, which can ensure the charging speed of the power battery without affecting the safety performance of the power battery.

In another implementation, the BMS can determine the negative electrode potential safety threshold for the power battery according to the charging mode of the power battery.

Here, the charging mode of the power battery may include, but is not limited to, the super fast charging mode, the regular fast charging mode, the long-life charging mode, and so on. The super fast charging mode is biased toward the requirement for the charging speed and typically has a higher charging current. In the case where the user is in a hurry to use the electrical apparatus including the power battery, the user will generally choose the super fast charging mode. Compared to the super fast charging mode, the regular fast charging mode does not have such a high requirement for the charging speed and can be interpreted as a charging mode that is a compromise between charging speed and charging safety. The long-life charging mode is biased toward the requirement for the charging safety and does not has a high requirement for the charging speed. Users generally choose the long-life charging mode when charging power batteries at night. It should be understood that the charging currents in the super fast charging mode, the regular fast charging mode, and the long-life charging mode decreases in order and the charging durations increase in order.

Of course, the charging mode of the power battery may also include other charging modes, such as the fixed-duration and fixed-SOC mode, which is a charging mode that charges to a certain SOC within a specified duration and is biased toward the scheduling function.

Optionally, the BMS can acquire the charging mode only once during the entire charging process. In other words, the charging mode is fixed during the whole charging process for the power battery. Alternatively, considering that the user may change the charging mode during the charging process, for example, the user selects the lone-life charging mode at the beginning of charging, and after charging for a period of time, the user may temporarily have an emergency and urgently need to use the electrical apparatus and then change the charging mode to the super fast charging mode, so the BMS can acquire the charging mode several times during the charging process. Exemplarily, the BMS can acquire the charging mode periodically, for example, the BMS can acquire the charging mode every 5s.

As an example, the BMS can determine the negative electrode potential safety threshold according to the acquired charging mode and according to the correspondence between charging modes and negative electrode potential safety thresholds.

Optionally, the correspondence between charging modes and negative electrode potential safety thresholds may be pre-configured on the BMS. For example, the correspondence between charging modes and negative electrode potential safety thresholds may be obtained from extensive experimental data, after which the correspondence may be configured on the BMS by the technician at the time the BMS leaves the factory.

By way of example and not limitation, the correspondence between charging modes and negative electrode potential safety thresholds may be pre-configured on the BMS in the form of a table or graph. In this way, the BMS can determine the charging mode by means of internal table look-up or internal graph look-up.

Optionally, the correspondence between charging modes and negative electrode potential safety thresholds may also be acquired by the BMS from other devices or from the cloud.

In the above technical solution, the negative electrode potential safety threshold is determined according to the correspondence between charging modes and negative electrode potential safety thresholds, which is not only simple to implement but also less time consuming.

Usually, the charging mode selected by the user is related to the current requirements of that user. For example, when the user selects the super fast charging mode, it indicates that the user expects that the power battery can be charged to the expected level or even fully in a short period of time. In this case, the negative electrode potential safety threshold cannot be too high. If the negative electrode potential safety threshold is too high, the charging current for the power battery will be limited and the charging duration of the power battery will be prolonged, which is exactly the opposite to the user's requirements. For example, when a user selects the long-life charging mode, which indicates that the user may not use the electrical apparatus including the power battery for some time in the future, the user has a low requirement for the charging speed and instead cares more about the safety performance of the power battery. In this case, the negative electrode potential safety threshold cannot be too low. If the negative electrode potential safety threshold is too low, it may be possible that the negative electrode potential of the power battery has dropped to the critical potential for lithium plating, but it still has not dropped to the negative electrode potential safety threshold, which will affect the safety performance of the power battery.

Therefore, with other factors being the same, the charging mode with a higher charging current corresponds to a smaller negative electrode potential safety threshold.

Assuming that the charging mode includes at least a first charging mode and a second charging mode, wherein in the first charging mode, the charging current for the power battery is a first charging current, and in the second charging mode, the charging current for the power battery is a second charging current, the first charging current being greater than the second charging current, and the negative electrode potential safety threshold corresponding to the first charging mode is less than the negative electrode potential safety threshold corresponding to the second charging mode. For example, the first charging mode is the super fast charging mode, and the second charging mode is the regular fast charging mode. With other conditions being the same, the negative electrode potential safety threshold corresponding to the super fast charging mode is 8 mv, and the safety threshold corresponding to the regular fast charging mode is 12 mv.

It should be understood that although the implementation for the BMS to determine the negative electrode potential safety threshold according to the battery state parameter of the power battery and the implementation to determine the negative electrode potential safety threshold according to the charging mode are separately described above, this does not mean that the two implementations are independent. The two implementations can be used in combination where they are not contradictory. For example, the BMS can determine the negative electrode potential safety threshold based on the charging mode of the power battery and the battery state parameter of the power battery.

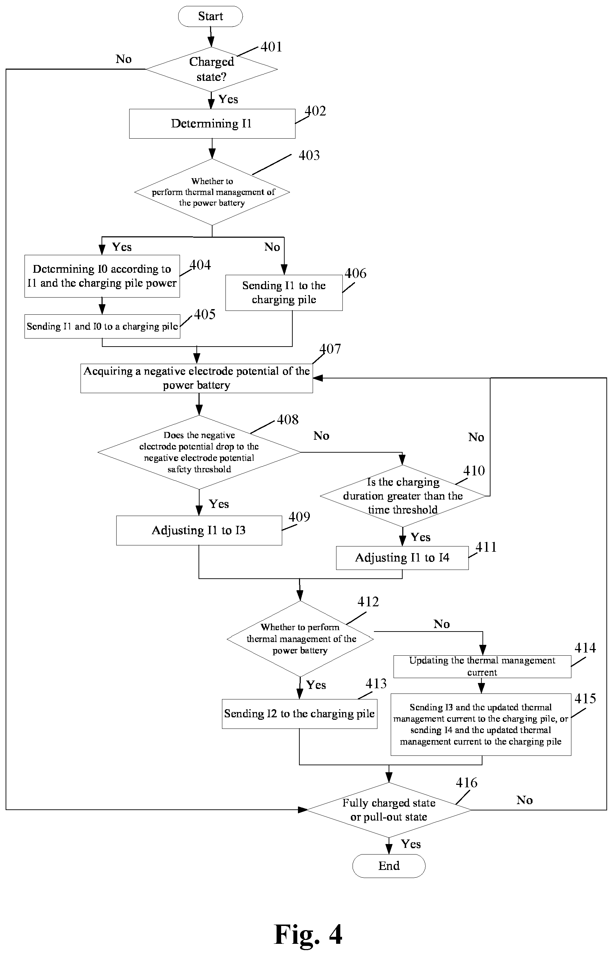

To more clearly understand the method 200 for charging a power battery of embodiments of the present application, a method for charging a power battery of a possible embodiment of the present application is described below in conjunction with Fig. 4.

Step 401: the BMS judges whether the power battery is in a charged state.

If the power battery is in the charged state, step 402 is executed; and if the power battery is not in the charged state, step 416 is executed.

Step 402: the BMS determines a first charging current I1 for the power battery.

Specifically, the BMS may first acquire parameters such as the SOC, the SOH, the temperature, and the voltage of the power battery, and determine I1 based on parameters such as the SOC, the SOH, the temperature, and the voltage of the power battery.

Step 403: the BMS judges whether to perform thermal management of the power battery.

The BMS may compare the temperature of the power battery with the temperature, and if the temperature of the power battery is less than the temperature threshold, the BMS determines to perform thermal management of the power battery, and then executes step 404; and if the temperature of the power battery is greater than or equal to the temperature threshold, the BMS determines not to perform thermal management of the power battery, and then executes step 406.

Step 404: the BMS determines a thermal management current I0 according to the first charging current I1 and charging pile power.

Step 405: the BMS sends the first charging current I1 and the thermal management current I0 to a charging pile.

Step 406: the BMS sends the first charging current I1 to the charging pile.

Step 407: during the charging process, the BMS acquires a negative electrode potential of the power battery in real time.

Step 408: the BMS compares the negative electrode potential of the power battery with the negative electrode potential safety threshold and judges whether the negative electrode potential of the power battery drops to the negative electrode potential safety threshold.

If the negative electrode potential of the power battery drops to the negative electrode potential safety threshold, step 409 is executed; and if the negative electrode potential safety threshold for the power battery does not drop to the negative electrode potential safety threshold, step 410 is executed.

Step 409: the BMS adjusts the first charging current I1 to a third charging current I3 and sends the third charging current I3 to the charging pile to enable the charging pile to charge the power battery based on I3.

Step 410: the BMS judges whether the charging duration of the power battery is greater than a time threshold.

If the charging duration is greater than the time threshold, the BMS executes step 411; and if the charging duration is less than the time threshold, the BMS executes step 407.

Step 411: the BMS adjusts the first charging current I1 to a fourth charging current I4 and sends the fourth charging current I4 to the charging pile to enable the charging pile to charge the power battery based on I4.

Step 412: the BMS judges whether to continue the thermal management of the power battery.

Specifically, the BMS determines the second charging current I2 based on the negative electrode potential of the power battery, and if the product of the voltage of the power battery and the second charging current I2 is equal to the charging pile power, the BMS determines to stop the thermal management of the power battery at the next moment and executes step 413; and if the product of the voltage of the power battery and the second charging current I2 is less than the charging pile power, the BMS determines to continue the thermal management of the power battery and executes step 414.

Step 413: the BMS sends the second charging current I2 to the charging pile.

Step 414: the BMS updates the thermal management current based on the third charging current I3, or updates the thermal management current based on the fourth charging current I4.

Step 415: the BMS sends the third charging current I3 and the updated thermal management current to the charging pile, or sends the fourth charging current I4 and the updated thermal management current to the charging pile.

Step 416: the BMS judges whether the power battery is in a fully charged state or a pull-out state.

If the power battery is in the fully charged state or the pull-out state, the charging process is finished; and if the power battery is not in the fully charged state or the pull-out state, the BMS continues to execute step 407.

The method embodiments of the present application have been described in detail above, and the apparatus embodiment of the present application will be described below. The apparatus embodiment corresponds to the method embodiments, so for the part not described in detail, reference can be made to the previous method embodiments, and the apparatus can implement any of the above methods that may be implemented.

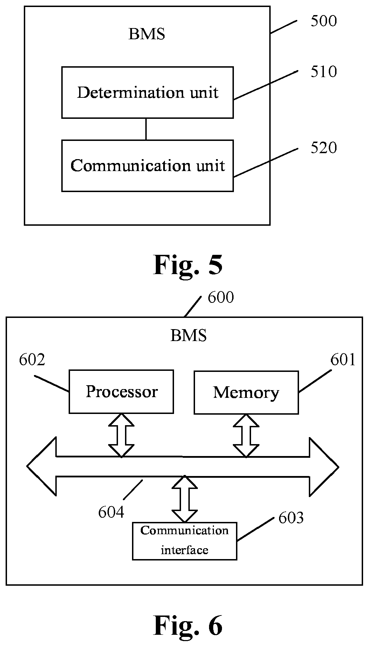

Fig. 5 illustrates a schematic block diagram of a BMS 500 of an embodiment of the present application. This BMS 500 may perform the method 200 for charging a power battery of the above embodiment of the present application. As shown in Fig. 5, this BMS 500 may include:

   a determination unit 510 for determining a first charging current for the power battery;
   the determination unit 510 being further used for determining, according to the temperature of the power battery, whether to perform thermal management of the power battery; and
   the determination unit 510 being further used for determining, if determining to perform the thermal management of the power battery, a thermal management current according to the first charging current and charging pile power; and
   a communication unit 520 for sending the first charging current and the thermal management current to a charging pile, wherein the first charging current is used for charging the power battery and the thermal management current is used for performing the thermal management of the power battery.

Optionally, in an embodiment of the present application, the first charging current is the maximum charging current allowed at the temperature of the power battery.

Optionally, in an embodiment of the present application, the temperature of the power battery is the temperature of the power battery before charging.

Optionally, in an embodiment of the present application, the battery management system 500 further comprises: an acquisition unit for acquiring a negative electrode potential of the power battery during a charging process for the power battery; the determination unit 510 being further used for determining, according to the negative electrode potential, that the power battery is capable of being charged at the charging pile power; a management unit for stopping the thermal management of the power battery; and the communication unit 520 being further used for sending a second charging current to the charging pile, wherein the second charging current is used for charging the power battery and is a charging current corresponding to the charging pile power.

Optionally, in an embodiment of the present application, the determination unit 510 is specifically used for: determining the second charging current according to a negative electrode potential of the power battery at a current moment, the second charging current being a charging current of the power battery at the next moment; and determining, according to the second charging current as well as the voltage of the power battery, that the power battery is capable of being charged at the charging pile power at the next moment.

Optionally, in an embodiment of the present application, the determination unit 510 is specifically used for: comparing the temperature of the power battery with a temperature threshold; and determining to perform the thermal management of the power battery if the temperature of the power battery is less than the temperature threshold.

Optionally, in an embodiment of the present application, the determination unit 510 is specifically used for: determining to perform the thermal management of the power battery if the temperature of the power battery is less than the temperature threshold and the difference between the charging pile power and charging power of the power battery is greater than or equal to minimum turn-on power for thermal management, wherein the charging power is the product of the first charging current and the voltage of the power battery.

Optionally, in an embodiment of the present application, the battery management system 500 further comprises: an adjustment unit for, in the process of performing the thermal management of the power battery, adjusting the first charging current to a third charging current if the negative electrode potential of the power battery drops to a negative electrode potential safety threshold, the third charging current being less than the first charging current.

Optionally, in an embodiment of the present application, the battery management system 500 further comprises: an adjustment unit for, in the process of performing the thermal management of the power battery, adjusting the first charging current to a fourth charging current if the negative electrode potential of the power battery does not drop to a negative electrode potential safety threshold and a charging duration of the power battery is greater than a time threshold, the fourth charging current being greater than the first charging current.

Optionally, in an embodiment of the present application, the determination unit 510 is further used for: determining the negative electrode potential safety threshold according to a battery state parameter of the power battery, the battery state parameter comprising at least one of the state of charge (SOC), the temperature, and the state of health (SOH) of the power battery.

It should be understood that this BMS 500 can implement the corresponding operations of the BMS in the method 200 and will not be repeated herein for brevity. Accordingly, this BMS 500 can achieve the same technical effect as the aforementioned method 200, which will not be described herein for the sake of brevity of content.

Fig. 6 is a schematic diagram of the hardware structure of a BMS of embodiments of the present application. The BMS 600 includes a memory 601, a processor 602, a communication interface 603, and a bus 604. Among them, the memory 601, the processor 602, and the communication interface 603 are communicatively connected to each other via the bus 604.

The memory 601 may be a read-only memory (ROM), a static storage device, and a random access memory (RAM). The memory 601 may store a program, and when the program stored in the memory 601 is executed by the processor 602, the processor 602 and the communication interface 603 are used to perform the various steps of the method for charging a power battery of embodiments of the present application.

The processor 602 may employ a general purpose central processing unit (CPU), a microprocessor, an application specific integrated circuit (ASIC), a graphics processing unit (GPU) or one or more integrated circuits for executing the relevant programs, so as to implement the functions required to be performed by the units in the apparatus of embodiments of the present application, or to implement the method for charging a power battery of embodiments of the present application.

The processor 602 may also be an integrated circuit chip that has a processing capability for signals. During implementation, the various steps of the method for charging a power battery of embodiments of the present application may be accomplished by integrated logic circuitry of the hardware in the processor 602 or by instructions in the form of software.

The above processor 602 may also be a general purpose processor, a digital signal processing (DSP), an ASIC, a field programmable gate array (FPGA) or other programmable logic devices, discrete gates or transistor logic devices, discrete hardware components. The methods, steps, and logical block diagrams as disclosed in embodiments of the present application can be implemented or performed. The general purpose processor may be a microprocessor, or the processor may also be any conventional processor, etc. The steps of the method disclosed in conjunction with the embodiments of the present application can be directly embodied as being performed by the hardware processor or being performed with a combination of hardware and software modules in the processor. The software module may be located in a random access memory, a flash memory, a read-only memory, a programmable read-only memory or an electrically rewritable programmable memory, a register, and other storage media well established in the art. The storage medium is located in the memory 601 and the processor 602 reads the information in the memory 601 and, in combination with its hardware, performs the functions required to be performed by the units included in the BMS of embodiments of the present application, or performs the method for charging a power battery of embodiments of the present application.

The communication interface 603 uses, for example, but not limited to, a transceiving apparatus such as a transceiver to enable communication between the BMS 600 and other devices or communication networks. For example, the BMS 600 can send charging request information to the charging pile via the communication interface 603.

The bus 604 may include a pathway for transmitting information between various components (e.g., the memory 601, the processor 602, and the communication interface 603) of the apparatus 600.

It should be noted that although the BMS 600 described above illustrates only the memory, the processor, and the communication interface, during specific implementation, it should be understood by those skilled in the art that the BMS 600 may also include other devices necessary to achieve normal operation. Meanwhile, depending on the specific needs, those skilled in the art should understand that the BMS 600 may also include hardware devices that implement other additional functions. Further, it should be understood by those skilled in the art that the BMS 600 may also include only those devices necessary to implement embodiments of the present application, and need not include all of the devices shown in Fig. 6.

Embodiments of the present application also provide a computer-readable storage medium storing program code for execution by a device, the program code comprising instructions for performing the steps in the method for charging a power battery described above.

Embodiments of the present application further provide a computer program product comprising a computer program stored on a computer-readable storage medium, wherein the computer program comprising program instructions that, when executed by a computer, cause the computer to perform the method for charging a power battery as described above.

The computer-readable storage medium described above may be a transitory computer-readable storage medium or a non-transitory computer-readable storage medium.

It should be understood that in the various embodiments of the present application, the values of the serial numbers of the processes does not imply the order of execution, and the order in which the processes are performed shall be determined by their functions and intrinsic logic, and shall not constitute any limitation to the implementation process of the embodiments of the present application.

It should also be understood that the various implementations described in this specification may be implemented individually or in combination, which is not limited in the embodiments of the present application.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

**Claims**

1. A method for charging a power battery, wherein the method is applied to a battery management system (BMS) for the power battery, the method comprising:

   determining a first charging current for the power battery;
   determining, according to the temperature of the power battery, whether to perform thermal management of the power battery;
   determining, if determining to perform the thermal management of the power battery, a thermal management current according to the first charging current and charging pile power; and
   sending the first charging current and the thermal management current to a charging pile, wherein the first charging current is used for charging the power battery and the thermal management current is used for performing the thermal management of the power battery.

2. The method according to claim 1, wherein the first charging current is a maximum charging current allowed at the temperature of the power battery.

3. The method according to claim 1 or 2, wherein the temperature of the power battery is the temperature of the power battery before charging.

4. The method according to any one of claims 1 to 3, further comprising:

   acquiring a negative electrode potential of the power battery during a charging process for the power battery;
   determining, according to the negative electrode potential, that the power battery is capable of being charged at the charging pile power;
   stopping the thermal management of the power battery; and
   sending a second charging current to the charging pile, wherein the second charging current is used for charging the power battery and is a charging current corresponding to the charging pile power.

5. The method according to claim 4, wherein said determining, according to the negative electrode potential, that the power battery is capable of being charged at the charging pile power comprises:

   determining the second charging current according to a negative electrode potential of the power battery at a current moment, wherein the second charging current is a charging current for the power battery at the next moment; and
   determining, according to the second charging current as well as the voltage of the power battery, that the power battery is capable of being charged at the charging pile power at the next moment.

6. The method according to any one of claims 1 to 5, wherein said determining, according to the temperature of the power battery, whether to perform thermal management of the power battery comprises:

   comparing the temperature of the power battery with a temperature threshold; and
   determining to perform the thermal management of the power battery if the temperature of the power battery is less than the temperature threshold.

7. The method according to claim 6, wherein said determining to perform the thermal management of the power battery if the temperature of the power battery is less than the temperature threshold comprises:

   determining to perform the thermal management of the power battery if the temperature of the power battery is less than the temperature threshold and the difference between the charging pile power and charging power of the power battery is greater than or equal to minimum turn-on power for thermal management, wherein the charging power is the product of the first charging current and the voltage of the power battery.

8. The method according to any one of claims 1 to 7, wherein in the process of performing the thermal management of the power battery, the method further comprises:
   adjusting the first charging current to a third charging current if the negative electrode potential of the power battery drops to a negative electrode potential safety threshold, the third charging current being less than the first charging current.

9. The method according to any one of claims 1 to 7, wherein in the process of performing the thermal management of the power battery, the method further comprises:
   adjusting the first charging current to a fourth charging current if the negative electrode potential of the power battery does not drop to a negative electrode potential safety threshold and a charging duration of the power battery is greater than a time threshold, the fourth charging current being greater than the first charging current.

10. The method according to claim 8 or 9, further comprising:
    determining the negative electrode potential safety threshold according to a battery state parameter of the power battery, the battery state parameter comprising at least one of the state of charge (SOC), the temperature, and the state of health (SOH) of the power battery.

**11.** A battery management system for charging a power battery, comprising:

a determination unit for determining a first charging current for the power battery;

the determination unit being further used for determining, according to the temperature of the power battery, whether to perform thermal management of the power battery; and

the determination unit being further used for determining, if determining to perform the thermal management of the power battery, a thermal management current according to the first charging current and charging pile power; and

a communication unit for sending the first charging current and the thermal management current to a charging pile, wherein the first charging current is used for charging the power battery and the thermal management current is used for performing the thermal management of the power battery.

**12.** The battery management system according to claim 11, wherein the first charging current is a maximum charging current allowed at the temperature of the power battery.

**13.** The battery management system according to claim 11 or 12, wherein the temperature of the power battery is the temperature of the power battery before charging.

**14.** The battery management system according to any one of claims 11 to 13, further comprising:

an acquisition unit for acquiring a negative electrode potential of the power battery during a charging process for the power battery;

the determination unit being further used for determining, according to the negative electrode potential, that the power battery is capable of being charged at the charging pile power;

a management unit for stopping the thermal management of the power battery; and

the communication unit being further used for sending a second charging current to the charging pile, wherein the second charging current is used for charging the power battery and is a charging current corresponding to the charging pile power.

**15.** The battery management system according to claim 14, wherein the determination unit is specifically used for:

determining the second charging current according to a negative electrode potential of the power battery at a current moment, wherein the second charging current is a charging current for the power battery at the next moment; and

determining, according to the second charging current as well as the voltage of the power battery, that the power battery is capable of being charged at the charging pile power at the next moment.

**16.** The battery management system according to any one of claims 11 to 15, wherein the determination unit is specifically used for:

comparing the temperature of the power battery with a temperature threshold; and

determining to perform the thermal management of the power battery if the temperature of the power battery is less than the temperature threshold.

**17.** The battery management system according to claim 16, wherein the determination unit is specifically used for:

determining to perform the thermal management of the power battery if the temperature of the power battery is less than the temperature threshold and the difference between the charging pile power and charging power of the power battery is greater than or equal to minimum turn-on power for thermal management, wherein the charging power is the product of the first charging current and the voltage of the power battery.

**18.** The battery management system according to any one of claims 11 to 17, further comprising:
an adjustment unit for, in the process of performing the thermal management of the power battery, adjusting the first charging current to a third charging current if the negative electrode potential of the power battery drops to a negative electrode potential safety threshold, the third charging current being less than the first charging current.

**19.** The battery management system according to any one of claims 11 to 17, further comprising:
an adjustment unit for, in the process of performing the thermal management of the power battery, adjusting the first charging current to a fourth charging current if the negative electrode potential of the power battery does not drop to a negative electrode potential safety threshold and a charging duration of the power battery is greater than a time threshold, the fourth charging current being greater than the first charging current.

20. The battery management system according to claim 18 or 19, wherein the determination unit is further used for: determining the negative electrode potential safety threshold according to a battery state parameter of the power battery, the battery state parameter comprising at least one of the state of charge (SOC), the temperature, and the state of health (SOH) of the power battery.

21. A battery management system for a power battery, comprising a processor and a memory, wherein the memory is used for storing a computer program, and the processor is used for invoking the computer program to execute the method for charging a power battery according to any one of claims 1 to 10.

100

110 —|

| Charging apparatus | Electric wire 130 | Battery system | — 120 |

**Fig. 1**

| Determining a first charging current for a power battery | S210 |

| Determining, according to the temperature of the power battery, whether to perform thermal management of the power battery | S220 |

| Determining, if determining to perform the thermal management of the power battery, a thermal management current according to the first charging current and charging pile power | S230 |

| Sending the first charging current and the thermal management current to a charging pile | S240 |

**Fig. 2**

**Fig. 3**

Start

Charged state? — 401

No

Yes

Determining I1 — 402

Whether to perform thermal management of the power battery — 403

Yes

Determining I0 according to I1 and the charging pile power — 404

Sending I1 and I0 to a charging pile — 405

No

Sending I1 to the charging pile — 406

Acquiring a negative electrode potential of the power battery — 407

Does the negative electrode potential drop to the negative electrode potential safety threshold — 408

No

Yes

Adjusting I1 to I3 — 409

Is the charging duration greater than the time threshold — 410

No

Yes

Adjusting I1 to I4 — 411

Whether to perform thermal management of the power battery — 412

No

Updating the thermal management current — 414

Yes

Sending I2 to the charging pile — 413

Sending I3 and the updated thermal management current to the charging pile, or sending I4 and the updated thermal management current to the charging pile — 415

Fully charged state or pull-out state — 416

No

Yes

End

**Fig. 4**

BMS 500

Determination unit 510

Communication unit 520

## Fig. 5

600

BMS

602 Processor

Memory 601

604

Communication interface 603

## Fig. 6

## INTERNATIONAL SEARCH REPORT

International application No.

**PCT/CN2021/133268**

| A. | CLASSIFICATION OF SUBJECT MATTER |
|---|---|

H01M 10/60(2014.01)i; H01M 10/44(2006.01)i; B60L 53/00(2019.01)i; H02J 7/00(2006.01)i

According to International Patent Classification (IPC) or to both national classification and IPC

| B. | FIELDS SEARCHED |
|---|---|

Minimum documentation searched (classification system followed by classification symbols)

H01M; B60L; H02J

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, IEEE: 车, 动力电池, 充电, 加热, 热管理, 温度, 功率, 负极, 电位, 电势, vehicle, traction battery, charge, heat, thermal management, temperature, power, negative electrode, potential

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 103427137 A (CHONGQING CHANGAN AUTOMOBILE CO., LTD. et al.) 04 December 2013 (2013-12-04) description, paragraphs 21-44, and figures 1-3 | 1-3, 6, 7, 11-13, 16, 17, 21 |
| Y | CN 103427137 A (CHONGQING CHANGAN AUTOMOBILE CO., LTD. et al.) 04 December 2013 (2013-12-04) description, paragraphs 21-44, and figures 1-3 | 4, 5, 8-10, 14, 15, 18-20 |
| Y | CN 108199122 A (HARBIN INSTITUTE OF TECHNOLOGY) 22 June 2018 (2018-06-22) description, paragraphs 106-242, and figures 1-7 | 4, 5, 8-10, 14, 15, 18-20 |
| A | CN 113815494 A (BEIJING LIANYU TECHNOLOGY CO., LTD.) 21 December 2021 (2021-12-21) entire document | 1-21 |
| A | EP 0834977 A2 (SCHMIDHAUSER AG) 08 April 1998 (1998-04-08) entire document | 1-21 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 July 2022** | **05 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/133268** |

| Patent document cited in search report | | | Publication date (day/month/year) | Patent family member(s) | | | Publication date (day/month/year) |
| --- | --- | --- | --- | --- | --- | --- | --- |
| CN | 103427137 | A | 04 December 2013 | CN | 103427137 | B | 07 October 2015 |
| CN | 108199122 | A | 22 June 2018 | CN | 108199122 | B | 13 September 2019 |
| CN | 113815494 | A | 21 December 2021 | None | | | |
| EP | 0834977 | A2 | 08 April 1998 | EP | 0834977 | A3 | 14 April 1999 |

Form PCT/ISA/210 (patent family annex) (January 2015)